# NEUE EUROPÄISCHE PATENTSCHRIFT

(11) **EP 0 771 630 B2**
(45) Veröffentlichungstag und Bekanntmachung des Hinweises auf die Entscheidung über den Einspruch: **15.11.2006**
(45) Hinweis auf die Patenterteilung: 03.01.2001
(21) Anmeldenummer: 96117265.7
(22) Anmeldetag: 28.10.1996
(51) Int. Cl.: B29B 9/10, C08J 3/12, C08K 5/00

(54) **Lagerstabile Kunststoffadditive**
Storage-stable plastic additives
Additifs pour matière plastique stables au stockage

(30) Priorität: 06.11.1995 DE 19541242
(43) Veröffentlichungstag der Anmeldung: 07.05.1997
(73) Patentinhaber: Clariant GmbH, 65929 Frankfurt am Main (DE)
(72) Erfinder: Gaa, Karl, Dr., 89349 Burtenbach (DE); Nowy, Günter, Dr., 86482 Aystetten (DE); Pfahler, Gerhard, Dr., 86169 Augsburg (DE); Zäh, Matthias, Dr., 86368 Gersthofen (DE)

(56) Entgegenhaltungen:
- EP-A- 0 054 868
- EP-A- 0 177 428
- EP-A- 0 210 131
- EP-A- 0 210 415
- EP-A- 0 475 201
- EP-A- 0 514 784
- EP-A- 0 565 184
- EP-A- 0 614 688
- EP-A- 0 619 137
- EP-B- 0 278 579
- US-A- 4 578 021
- PATENT ABSTRACTS OF JAPAN vol. 015, no. 056 (C-0804), 8.Februar 1991 & JP 02 286657 A (ADEKA ARGUS CHEM CO LTD), 26.November 1990, & DATABASE WPI Week 9102 Derwent Publications Ltd., London, GB; AN 91-012476
- Research Disclosure Januar 1982, 21310 (Seite 467)
- Plastics Additives Handbook , 4th edition, table of contents 11/96
- Taschenbuch der Kunststoff-Additive, 2. Ausgabe. S. 320-335, 1983
- Prospekt "Sandvik Anlagen zum Kuehlen und Verfestigen", April 1994

## Beschreibung

Kunststoffadditive sind modifizierend und/oder stabilisierend wirkende Zusätze zu Polymeren. Neben einer für die Funktion maßgeblichen chemischen Teilstruktur im Molekül besitzen sie in aller Regel Substituenten, mit denen die "Verträglichkeit" (z.B. Löslichkeit, Diffusionsvorhalten, Extraktionsresistenz u.a) des Additives mit der polymeren Matrix geregelt wird (Lit.: Gächter/Müller, Kunststoffadditive, 3, Auflage 1990, Carl Hanser Verlag München Wien, S. 33 ff). Auch der funktionelle Molekülteil wird häufig durch sehr sperrige chemische Substituenten in seiner Reaktivität geregelt ("sterisch gehinderte Phenole" als Antioxidantien, "sterisch gehinderte Amine' als Lichtschutzmutel).

Diese Strukturelemente bewirken, daß die Kristallisation derartiger Additive bei der Herstellung häufig nur verzögert verläuft und/oder unvollständig ist und/oder zu mehreren Kristallmodifikationen führt, die sich leicht ineinander umwandeln lassen. Dies führt zu breiten Schmelzbereichen (anstelle scharfer Kristallitschmelzpunkte) oder mehrfachen ineinander übergehenden Schmelzpunkten.

Unmittelbar nach Herstellung einer pulverförmigen Handhabungsform führt diese verzögerte Kristallisation und/oder Umlagerung der weniger stabilen in stabilere Kristaflftstrukturen dazu, daß beim Lagern und Handhaben der Produkte im Laufe der Zeit ein Ineinanderwachsen von Kristalliten in den Oberflächen sich berührender Partikel erfolgt, was zur mechanischen Verklebung, Verfilzung bzw. Verbackung des Materials führt Die derart entstehenden Klumpen stören das Rieselverhalten und die Dosierbarkeit der Additive erheblich, wodurch das Additiv für seine Verwendung unbrauchbar wird. Die Störung ist besonders ausgeprägt, wenn der Schmelzbereich unter 150°C liegt.

Es wurden zahlreiche Versuche unternommen, diese Eigenschaft zu verbessern, beispielsweise wurde der Zusatz hochdisperser Kieselsäuren oder von Metallstearaten oder -oxiden zur Oberflächen-Puderung der zum Kleben neigenden Partikel empfohlen (Lit.: z.B. Degussa-Broschtrren aus der Schriftenreihe Pig-mente: "Aerosil zur Verbesserung des Fließverhaltens pulverförmiger Substan-zen", Nr. 31, 2. Auflage 5/1978 und "Synthetische Kieselsäure als Fließhilfsmittel und als Trägersubstanz", Nr. 31, 5. Auflage, 5/1992). Ein Nachteil dieser Methode besteht im Einbringen von unerwünschten Fremdstoffen in das eigentliche Additiv

Auch die Herstellung tablettenartiger Konfektionate aus Pulver unter Aufwendung von hohem Druck wurde propagiert. Als schwerwiegender Nachteil muß hierbei der zusätzliche Arbeitsschritt gesehen werden, derdas Produkt verteuert und eine Verunreinigungsgefahr durch mechanischen Abrieb beinhaltet. Auch das Erstarrenlassen von Schmelze und anschließendes Vermahlen wird praktiziert. Nachteil dabei ist, daß das Endprodukt unter Druck leicht verfilzt und verbackt (z.B. unter dem Gewicht eines Palettenstapels bei Transport im Sommer) und einen hohen Staubanteil aufweist.
Ebenfalls vorgeschlagen wurde die Sprühkühlung aus der Schmelze, die aber den Nachteil der sehr schlechten Kontrolle der Kristallisation und oft der sehr ausgeprägten Backneigung mit sich bringt.

US 4,578,021 beschreibt eine Maschine, mit deren Hilfe aus einem Zweiphasengemisch, bestehend aus einer Schmelze und Kristallkeimen, über einen Tropfenformer mit anschließender Abkühlung Granulat mit einheitlicher Größe hergestellt werden kann, so daß eine anschließende Mahlung überflüssig wird. Die bisher übliche Bildung von Ablagerungen und Verkrustungen im Tropfenformer wird hierbei vermieden.

EP-A-54 868 beschreibt ein Verfahren zur Herstellung von Granulaten aus organischen, in Form einer Schmelze vorliegenden Stoffen durch Kühlkristallisation in einer Zweiwellenschneckenmaschine. Dabei müssen die Temperatur in der Schneckenmaschine, ihre Drehzahl und die Temperatur der Lochplatte, durch die das Material anschließend extrudiert und weiter abgekühlt wird, genau geregelt werden, um das Verhältnis von flüssiger und kristalliner Phase einzustellen.

Aufgabe dervorliegenden Erfindung war, Additive für Kunststoffe bereitzustellen, die ohne Zusatz von Fremdstoffen auch nach längerer Lagerung und Handhabung noch rieselfähig und gut dosierbar sind.

Es wurde nun gefunden, daß sich die Verbackungsneigung solcher Additive beseitigen, die Dosierbarkeit und das Riesel- und Transportverhalten erheblich verbessern und die Bildung von Staub oder Abrieb stark reduzieren läßt durch Kunststoffadditive, dadurch hergestellt, daß eine Mischung aus 99,5 bis 25 Gew.-% geschmolzenem und 0,5 bis 75 Gew.-% kristallinem Material des Additivs nach einem formgebenden Prozeß auf einem gekühlten Transportband abgekühlt wird.

Durch die Änderung des Anteils an kristalliner Substanz läßt sich die Viskosität des Gemenges in weiten Grenzen variieren und den Notwendigkeiten des formgebenden Prozesses anpassen. Das Endprodukt entsteht dabei in seiner stabilen Kristallmodifikation und erfährt keine Umlagerung mehr, die zur Verfilzung der Partikel führt. Das Endprodukt entsteht in einer definierten, einheitlichen und in breiten Grenzen durch Variation der Schmelzviskosität und des formgebenden Prozesses gezielt einstellbaren Partikelgröße (z.B. von 0,1 bis 10 mm).

Vorteilhafterweise lassen sich die erfindungsgemäßen Kunststoffadditive dadurch herstellen, , daß eine Mischung aus 90 bis 30 Gew.-% geschmolzenem und 10 bis 70 Gew.-% kristallinern Material des Additivs eingesetzt wird.

Besonders bevorzugt sind Kunststoffadditive, dadurch hergestellt, daß eine Mischung aus 70 bis 50 Gew.-% geschmolzenem und 30 bis 50 Gew.-% kristallinem Material des erfolgt Additivs eingesetzt wird.

Die rasche Abkühlung der Mischung auf einem gekühlten Transportband.

Als formgebender Prozeß hat sich besonders das Ausdrucken der Mischung aus einem mit Düsenöffnungen versehenen Werkzeug (Lochdüse) bewährt.

Als formgebender Prozeß kann beispielsweise eingesetzt werden:
- Ausdrücken der Mischung aus einer zylindrischen Düsenanordnung mittels einer Stauleiste
- Ausdrücken der Mischung aus einer zylindrischen Düsenanordnung mit innenliegender Verzahnung und Düsenbohrung im Zahngrund durch ein innenliegendes Zahnrad
- Ausdrücken der Mischung aus einer zylindrischen Düsenanordnung mit innenliegenden Bohrungen und Düsenbohrung im Bohrgrund durch einen Stempel
- Ausdrücken der Mischung durch eine flache Lochplatte mittels Kollerrädem
- Ausdrücken der Mischung durch eine flache Lochplatte mittels einer Schneckenpresse
- Passieren durch eine Lochplatte durch umlaufende Walzen
- Extrudieren mit einer Schneckenpresse (Ein- oder Zweischnecken-Extruder)
- Auspressen durch ein mit mehreren Düsenöffnungen versehenes Mundstück einer Stempelpresse
- Auspressen durch ein mit zahlreichen Düsenöffnungen versehenes Rohrwerkzeug mittels eines Abstreifrakels

Durch den Anteil an kristallisierter Substanz im geschmolzenen Material wird eine leichtere Temperaturregelung erzielt, da beim Abkühlen sich vermehrt ausscheidende Kristalle durch ihre Kristallisationswärme dem Absinken der Temperatur entgegenwirken und umgekehrt.

Kunststoffadditive, auf die das erfindungsgemäße Verfahren mit Erfolg angewendet werden kann, sind 2-Hydroxy-4-n-octoxybenzophenon, Laurinsäurediethanolamid, Glycerinmono-, di- und -tristearat sowie Gemische dieser Glycerinstearate, Dioctadecylsulfid, Gemische aus Dialkylmono-, -di- und -polysulfiden, Distearylthiodipropionat, Dilaurylthiadipropionat, Bis-stearoyl-ethylendiamin, Pentaerythrityl-tetrakis-3-(3,5-di-tert.-butyl-4-hydroxy-phenyl)-propionat, Octadecyl-3-(3,5-di-tert.-butyl-4-hydroxyphenyl)-propionat, Tetrakis-(2,4-di-tert.-butyl-phenyl)- 4,4'-biphenylendiphosphonit, Distearylpentaerythritoldiphosphit, Di-(2,2,6,6-Tetramethylpiperidin-4-yl)-sebacat, Bis-(2,4-di-terL-butyl-phenyl)-pontaarythritoldiphosphit.

Die folgenden Beispiele sollen die Erfindung verdeutlichen, ohne sie zu beschränken:

### Beispiel 1:

Ein Brei aus einer Schmelze von 95 Gew.-% 2-Hydroxy-4-n-octoxybenzophenon vermischt mit 5 Gew.-% kristalliner Substanz wird durch eine Lochdüse von 1,0 mm Durchmesser im Bereich seiner Schmelztemperatur mit einer Stauleiste auf ein vorbeilaufendes, gekühltes Metallband gedrückt. Es entstehen Tropfen, die beim Aufliegen auf dem Band sofort kristallisieren und am Ende des Bandes als feste, staubfreie Teilchen mit klebfreier Oberfläche abgestreift werden können.

### Beispiel 2-7:

Der Versuch aus Beispiel 1 wird wiederholt, wobei der Schmelze 1, 10, 30, 50 und 75 Gew.-% kristallisiertes Pulver des gleichen 2-Hydroxy-4-n-octoxybenzophenon beigemischt wurden. Alle erstarrten Teilchen sind staubfrei und klebfrei.

### Beispiel 8 (Vergleich):

Der Versuch aus Beispiel 1 wird wiederholt, wobei der Produktschmelze keine kristallisierte pulverförmige Substanz beigemischt wurde.
Die Tropfen auf dem gekühlten Band sind am Ende des Bandes nur teilweise verfestigt und kleben.

### Beispiel 9:

Es werden verschiedene Chemikalien, die als Kunststoffadditiv Verwendung finden, gemäß Beispiel 1 unter Beimischung von jeweils 50 Gew.-% an kristallisierter Substanz auf ein gekühltes Band getropft und am Ende abgenommen. Sie werden wie folgt auf ihre Klebrigkeit/Verbackungsneigung geprüft:
Es wird jeweils ein Glasstutzen, der mit einem offenen Ende auf einer ebenen Unterlage steht und einen Durchmesser von 5,2 cm und eine Höhe von 10 cm aufweist, mit je 50 g der konfektionierten Substanz befüllt und von oben mit einer Flächenpressung vom 0,93 N/cm² durch Auflagen eines Gewichtes beaufschlagt. Die gesamte Anordnung wird In einem Wärmeschrank 24 h bei erhöhter Temperatur gelagert. Auf diese Weise wird der Druck eines Palettenstapels beim Transport unter sommerlichen Temperaturbedingungen nachgeahmt. Zum Vergleich dient jeweils eine Ware, die ohne Zusatz von kristallinen Anteilen zur Schmelze beim formgebenden Vorgang hergestellt wurde. Es wird bewertet, mit welchem Kraftaufwand nach dem Entfernen des umhüllenden Glasstutzens die Produktschüttung wieder in die Einzelteilchen zerdrückt werden kann.

| Produkt | Lagertemp. °C | Kraftaufwand zum Zerteilen | |
|---|---|---|---|
| | | getropft aus Gemisch Kristallbrei/Schmelze | getropft aus reiner Schmelze |
| 2-Hydroxy-4-n-octoxybenzophenon | 40 | zerfällt bei Berührung | hoher Kraftaufwand wenige massive Brocken |
| Laurinsäurediethanolamid | 35 | " | sehr hoher Kraftaufwand wenige Brocken |
| Gemisch aus Glycerinmono-, -di- und -tristearat | 40 | " | hoher Kraftaufwand |
| Dioctadecyldisulfid | 40 | zerfällt sofort | sehr hoher Kraufaufwand |
| Distearylthiodipropionat | 40 | " | mit Kraftaufwand zerteilbar, brockig |
| Dilaurylthiodipropionat | 35 | zerfällt bei leichtem Druck | hoher Kraftaufwand große Brocken |
| Bisstearoylethylendiamin | 40 | zerfällt bei Berührung | mittlerer Kraftaufwand |
| Pentaerythrityftetrakis-3-(3,5-di-tert.-butyl-4-hydroxyphenyl)-proplonat | 40 | zerfällt sofort | hoher Kraftaufwand |
| Octadecyl-3-(3,5-di-tert.-butyl-4-hydroxy-phenyl)-propionat | 40 | zerfällt bei Berührung | hoher Kraftaufwand brockig |
| Tetrakis-(2,4-di-tert. -butyl-phenyl)-4,4'-biphenylendiphosphonit (technisches Isomerengemisch) | 35 | " | sehr hoher Kraftaufwand wenige Brocken |
| Di-stearylpentaerythritoldiphosphit | 40 | zerfällt sofort | hoher Kraftaufwand große Brocken |
| Bis-(2,4-di-tert.-butylphenyl)-pentaerythritoldiphosphit | 40 | zerfällt sofort | mittlerer Kraftaufwand |
| Ethylenglykol-bis-3,3-(4-hydroxy-3-tert-butylphenyl)-butyrat | 40 | " | " |

### Beispiel 10:

Ein Brei aus 2-Hydroxy-4-n-octoxybenzophenon bestehend aus 90 Gew % Schmelze vermischt mit 10 Gew.-% kristalliner Substanz wird durch eine umlaufende zylinderförmige Düsenplatte mit innenliegender Verzahnung und Düsenbohrungen im Zahngrund durch ein Zahnrad auf ein unter den Düsen vorbeilaufendes, gekühltes Metallband getropft. Die Tropfen erstarren und werden am Ende des Bandes abgestreift. Ein Warmiagerversuch nach Beispiel 9 ergibt eine Schüttung, die bei Berührung sofort zerfällt.

### Beispiel 11:

Der Versuch aus Beispiel 10 wird wiederholt, wobei die umlaufende zylinderförmige Düsenplatte innenliegende Bohrungen mit zusätzlichen Düsenbohrungen im Bohrgrund besitzt. Durch Stempel (z.B. mechanisch ausgelöst durch Exzenter) wird die Substanz durch die Düsen auf das vorbeilaufende, gekühlte Metallband getropft. Die Tropfen erstarren und werden am Ende des Bandes abgestreift Die Warmlagerung wie im Beispiel 9 ergibt wiederum eine Schüttung, die sofort zerfällt.

### Beispiel 12:

Ein Brel aus 2-Hydroxy-4-n-octoxybenzophenon bestehend aus 25 Gew.-% geschmolzener und 75 Gew.-% kristalliner Substanz wird mittels Kollerrädem durch eine flache Lochplatte gepreßt. Das Produkt wird mit einem Abstreifmesser abgeschnitten und fällt auf ein gekühltes Metallband. Das vollständig kristallisierte Konfektionat wird am Ende des Bandes abgestreift. Ein Warmlagerversuch nach Beispiel 9 ergibt eine Schüttung, die sofort wieder zerfällt.

## Patentansprüche

1. Verfahren zur Herstellung eines lagerstabilen Kunststoffadditivs, **dadurch gekennzeichnet, dass** in einem ersten Schritt zu 99,5 bis 25 Gew.-% geschmolzenem 0,5 bis 75 Gew.-% kristallines Material des Additive zugegeben wird, dass in einem zweiten Schritt diese Mischung einem formgebenden Prozess unterworfen wird, und dass in einem dritten Schritt auf einem gekühlten Transportband abgekühlt wird, wobei
als Additiv 2-Hydroxy-4-n-octoyxbenzophenon, Laurinsäurediethanolamid, Glycerinmono-, di- und -tristearat sowie Gemische dieser Glycerinstearate, Dioctadecylsulfid, Gemische aus Dialkylmono-, di- und -polysulfiden, Distearylthiodipropionat, Dilaurylthiodiproprionat, Bis-stearoyl-ethylendiamin, Pentaerythrityl-tetrakis-3-(3,5-di-tert-butl-4-hydroxy-phenyl)-proiprionat, Octadecyl-3-(3,5-di-tert.-butyl-4-hydroxyphenyl-4-proprionat, Tetrakis-(2,4-di-tert.-butyl-phenyl)- 4,4'-biphenylendiphosphonit, Distearylpentaerythritoldiphosphit, Di-(2,2,6,6-Tetramethylpineridin-4-yl)-sebacat Bis-(2,4-di-tert.-butyl-phenyl)-pentaerythritoldiphosphit eingesetzt wird.

2. Verfahren nach Anspruch 1, **dadurch gekennzeichnet, daß** eine Mischung aus. 90 bis 30 Gew.-% geschmolzenem und 10 bis 70 Gew.-% kristallinem Material des Additivs eingesetzt wird.

3. Verfahren nach Anspruch 1, **dadurch gekennzeichnet, daß** eine Mischung aus 70 bis 50 Gew.-% geschmolzenem und 30 bis 50 Gew.-% kristallinem Material des Additivs eingesetzt wird.

4. Verfahren nach mindestens einem der Ansprüche 1 bis 3, **dadurch gekennzeichnet, daß** der formgebende Prozeß im Ausdrücken der Mischung aus einem mit Düsenöffnungen versehenen Werkzeug besteht.

5. Verfahren nach mindestens einem der Ansprüche 1 bis 3, **dadurch gekennzeichnet, daß** der formgebende Prozeß. im Ausdrücken der Mischung aus einer zylindrischen Düsenanordnung mittels einer Stauleiste besteht.

6. Verfahren nach mindestens einem der Ansprüche 1 bis 3, **dadurch gekennzeichnet, daß** der formgebende Prozeß Im Ausdrucken der Mischung aus einer zylindrischen DOsenanordnung mit innenliegender Verzahnung und Düsenbohrung im Zahngrund durch ein innenliegendes Zahnrad besteht.

7. Verfahren nach mindestens einem der Ansprüche 1 bis 3, **dadurch gekennzeichnet, daß** der formgebende Prozeß im Ausdrücken der Mischung aus einer zylindrischen Düsenanordnung mit innenliegenden Bohrungen und Düsenbohrung im Bohrgrund durch einen Stempel besteht.

8. Verfahren nach mindestens einem der Ansprüche 1 bis, 3, **dadurch gekennzeichnet, daß** der formgebende Prozeß Im Ausdrücken der Mischung durch eine flache Lochplatte mittels Kollerrädern besteht.

9. Verfahren nach mindestens einem der Ansprüche 1 bis 3, **dadurch gekennzeichnet, daß** derformgebende Prozeß im Ausdrücken der Mischung durch eine flache Lochplatte mittels einer Schneckenpresse besteht.

## Claims

1. A process for the preparation of a storage-stable plastics additive, which comprises in a first step adding from 0.5 to 75% by weight of crystalline additive to from 99.5 to 25% by weight of molten additive, and in a second step subjecting this mixture to a shaping process, and then in a third step cooling this mixture on a cooled conveyor belt, the additive used being 2-hydroxy-4-n-octoxybenzophenone, lauric acid diethanolamide, glycerol mono-, di- and tristearate and mixtures of these glycerol stearates, dioctadecyl sulfide, mixtures of dialkyl mono-, di- and polysulfides, distearyl thiodipropionate, dilauryl thiodipropionate, bisstearoylethylenediamine, pentaerythrityl tetrakis-3-(3,5-di-tert-butyl-4-hydroxyphenyl)propionate, octadecyl 3-(3,5-di-tert-butyl-4-hydroxyphenyl)propionate, tetrakis-(2,4-di-tert-butyl-phenyl) 4,4'-biphenylenediphosphonite, distearyl pentaerythritol diphosphite, di(2,2,6,6-tetramethylpiperidin-4-yl) sebacate and bis(2,4-di-tert-butylphenyl) pentaerythritol disphosphite.

2. A process as claimed in claim 1, wherein a mixture of 90 to 30% by weight of molten additive material and 10 to 70% by weight of crystalline additive material is employed.

3. A process as claimed in claim 1, wherein a mixture of 70 to 50% by weight of molten additive material and 30 to 50% by weight of crystalline additive material is employed.

4. A process as claimed in at least one of claims 1 to 3, wherein the shaping process comprises forcing the mixture out of a die provided with die openings.

5. A process as claimed in at least one of claims 1 to 3, wherein the shaping process comprises forcing the mixture out of a cylindrical die arrangement by means of a choker bar.

6. A process as claimed in at least one of claims 1 to 3, wherein the shaping process comprises forcing the mixture out of a cylindrical die arrangement with internal toothing and a die bore in the tooth base by an internal toothed wheel.

7. A process as claimed in at least one of claims 1 to 3, wherein the shaping process comprises forcing the mixture out of a cylindrical die arrangement with internal bores and a die bore in the bore base by a stamp.

8. A process as claimed in at least one of claims 1 to 3, wherein the shaping process comprises forcing the mixture through a flat perforated plate by means of edge runners.

9. A process as claimed in at least one of claims 1 to 3, wherein the shaping process comprises forcing the mixture through a flat perforated plate by means of an extruder.

## Revendications

1. Procédé de fabrication d'un additif pour matières plastiques, stable au stockage, **caractérisé en ce que**, dans une première étape, on ajoute de 99,5 à 25 % en poids d'un matériau fondu de l'additif et de 0,5 à 75 % en poids d'un matériau cristallin de l'additif, **en ce que**, dans une deuxième étape, on soumet ce mélange à un procédé de façonnage, et **en ce que**, dans une troisième étape, on le refroidit sur une bande transporteuse refroidie, ce à l'occasion de quoi on utilise en tant qu'additifs la 2-hydroxy-4-n-octoxy-benzophénone, le diéthanolamide de l'acide laurique, le mono-, le di- et le tristéarate de glycérol, ainsi que les mélanges de ces stéarates de glycérol, le sulfure de dioctadécyle, les mélanges de mono-, de di- et de polysulfures de dialkyle, le thiodipropionate de distéaryle, le thiodipropionate de dilauryle, la bis-stéaroyléthylènediamine, le tétrakis-3-(3,5-di-tert-butyl-4-hydroxyphényl)propionate de pentaérythrityle, le 3-(3,5-di-tert-butyl-4-hydroxyphényl)propionate d'octadécyle, le 4,4'-diphénylènediphosphonite de tétrakis(2,4-di-tert-butyl-phényle), le diphosphite de distéarylpentaérythritol, le sébaçate de di(2,2,6,6-tétraméthylpipéridine-4-yle), le diphosphite de bis(2,4-di-tert-butyl-phényl)-pentaérythritol.

2. Procédé selon la revendication 1, **caractérisé en ce qu'**on utilise un mélange de 90 à 30 % en poids du matériau fondu de l'additif et de 10 à 70 % en poids du matériau cristallin de l'additif.

3. Procédé selon la revendication 1, **caractérisé en ce qu'**on utilise un mélange de 70 à 50 % en poids du matériau fondu de l'additif et de 30 à 50 % en poids du matériau cristallin de l'additif.

4. Procédé selon au moins l'une des revendications 1 à 3, **caractérisé en ce que** le procédé de façonnage réside dans l'éjection du mélange, à partir d'un moule pourvu d'orifices de buse.

5. Procédé selon au moins l'une des revendications 1 à 3, **caractérisé en ce que** le procédé de façonnage consiste en l'éjection du mélange à partir d'un arrangement de buses cylindriques, à l'aide d'une baguette de contre-pression.

6. Procédé selon au moins l'une des revendications 1 à 3, **caractérisé en ce que** le procédé de façonnage réside dans l'éjection du mélange à partir d'un arrangement de buses cylindriques, avec denture intérieure, et trou de buse dans la fond de la dent, à l'aide d'une roue dentée intérieure.

7. Procédé selon au moins l'une des revendications 1 à 3, **caractérisé en ce que** le procédé de façonnage réside dans l'éjection du mélange à partir d'un arrangement de buses cylindriques avec trous intérieurs, avec un trou de buse dans le fond du trou, à l'aide d'un poinçon.

8. Procédé selon au moins l'une des revendications 1 à 3, **caractérisé en ce que** le procédé de façonnage réside dans l'éjection du mélange par une plaque de filière plane, à l'aide de roues à meule.

9. Procédé selon au moins l'une des revendications 1 à 3, **caractérisé en ce que** le procédé de façonnage réside dans l'éjection du mélange par une plaque de filière plane à l'aide d'une presse à vis.
